Europäisches Patentamt

European Patent Office

Office européen des brevets

(11) Publication number: **0 484 942 B1**

# EUROPEAN PATENT SPECIFICATION

(45) Date of publication of patent specification: **17.05.95**

(51) Int. Cl.⁶: **B29D 7/01**, B29C 55/00, //B29K67/00

(21) Application number: **91118991.8**

(22) Date of filing: **07.11.91**

(54) **Insulating material for air conditioner or refrigerator.**

(30) Priority: **08.11.90 JP 303354/90**

(43) Date of publication of application: **13.05.92 Bulletin 92/20**

(45) Publication of the grant of the patent: **17.05.95 Bulletin 95/20**

(84) Designated Contracting States: **DE FR GB IT LU NL**

(56) References cited:
EP-A- 0 483 757
DE-B- 1 222 205

DATABASE WPIL Section Ch, Week 23, Derwent Publications Ltd., London, GB; Class A, AN 90-176335 & RD-313010 (ANONYMOUS) 10 May 1990

DATABASE WPIL Section Ch, Week 13, Derwent Publications Ltd., London, GB; Class A, AN 90-096312 & JP-A-2 049 309 (DIAFOIL) 19 February 1990

DATABASE WPIL Section Ch, Week 35, Derwent Publications Ltd., London, GB; Class A, AN 90-265684 & JP-A-2 187 331 (MITSUBISHI KASEI) 23 July 1990

DATABASE WPIL Section Ch, Week 03, Derwent Publications Ltd., London, GB; Class A, AN 90-019237 & JP-A-1 299 019 (UNITIKA) 1 December 1989

(73) Proprietor: **DIAFOIL COMPANY, LIMITED**
**3-2, Marunouchi 2-chome**
**Chiyoda-ku**
**Tokyo (JP)**

(72) Inventor: **Masuda, Narihiro**
**2-6-3, Tachibanadai,**
**Midori-ku**
**Yokohama-shi,**
**Kanagawa-ken (JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

**Description**

BACKGROUND OF THE INVENTION

Field of the Invention

The present invention relates to an insulating material for an air conditioner or a refrigerator, which is excellent in resistance to heat, halogenated hydrocarbons and hydrolysis, and contains a decreased amount of low molecular weight compounds to be extracted with a refrigerant.

Description of the Related Art

Fluorohydrocarbons which are used as refrigerants of an air conditioner or a refrigerator are said to be a cause of depletion of the ozonosphere or global warming. Then, the Second Conference of the Contracting Countries of the Montreal Protocol decided that the specific halogenated hydrocarbons having a high ozone depletion potential (ODP) such as $CCl_3F$ (R11) and $CCl_2F_2$ (R12) will be totally banned. In view of this decision, one of the most promising substitute refrigerants is $CH_2FCF_3$ (R134a), which has no ozone depletion potential (ODP = 0) and a very small global warming potential (GWP < 0.1) and then little influence on the environment.

Since R134a is not compatible with a mineral oil which has been used as a lubricant, it is necessary to use water-absorbing polyalkylene glycol (hereinafter referred to as "PAG") as a substitute lubricant for the mineral oil.

Since a motor for the air conditioner or the refrigerator functions as a compressor of the refrigerant, it is always placed in an atmosphere of a mixture of the above lubricant and the refrigerant, so that a gaseous refrigerant at high temperature and high pressure and also the lubricant containing a large amount of the dissolved refrigerant contact to a motor coil. In addition, when the compressor is stopped, the liquid refrigerant accumulates in an interior of the compressor. Though the insulating material is subjected to such severe conditions for a long time, it is required to have a semi-permanent life.

Hitherto, in such application, a film of polyethylene terephthalate (hereinafter referred to as "PET") has been widely used as an insulating material, since, among engineering plastics, it has good balance of heat resistance, solvent resistance, electric insulation, mechanical strength, etc. But, the PET film is easily hydrolyzed with water contained in the lubricant in R134a and its mechanical strength and electrical insulation property are inevitably greatly decreased.

Since a film of poly-1,4-cyclohexanedimethylene terephthalate (hereinafter referred to as "PCT") has far superior resistance to hydrolysis at high humidity and high temperature to the PET film (Soc. Plastics Engrs. Journal, 17, 1083 (1961)), it is expected that the PCT film would be a better insulating material of the motor for the air conditioner or the refrigerator when the refrigerant is used together with PAG as the lubricant.

However, PCT is more easily oxidatively or thermally destructed during melt processing than PET and the PCT film tends to contain a comparatively large amount of low molecular weight materials which are generated by such destruction. Also, low molecular weight PCT molecules (oligomers) are contained in the PCT film. All of these low molecular weight materials are gradually extracted with the refrigerant used in the air conditioner or the refrigerator and contaminate the refrigerant. Without solving such defect, the PCT film cannot be used as an insulating material of the air conditioner or the refrigerator.

SUMMARY OF THE INVENTION

An object of the present invention is to provide a PCT film which contains a smaller amount of low molecular weight materials and is suitable as an insulating material to be used in an air conditioner or a refrigerator.

According to the present invention, there is provided an insulation material for an air conditioner or a refrigerator, consisting of a biaxially oriented film of poly-1,4-cyclohexanedimethylene terephthalate which satisfies the following four property requirements:

$$270 \leq MP \quad (1)$$

$$1.220 \leq \rho \leq 1.245 \quad (2)$$

$$0.090 \leq \Delta P \leq 0.115 \quad (3)$$

and

$$W \leq 1.3 \quad (4)$$

wherein MP is a crystalline melting point ($^{\circ}$C), $\rho$ is a density of the film (g/cm$^3$), $\Delta P$ is a degree of plane orientation of the film, and W is an extracted amount from the film with chloroform (wt. %/24 hours).

## DETAILED DESCRIPTION OF THE INVENTION

The PCT film of the present invention has a crystalline melting point of at least 270$^{\circ}$C, preferably at least 280$^{\circ}$C. For example, when at least 90 % by mole, preferably at least 95 % by mole of an acid component of PCT is terephthalic acid and at least 95 % by mole, preferably at least 97 % by mole of a glycol component of PCT is 1,4-cyclohexanedimethanol, PCT has a crystalline melting point of at least 270$^{\circ}$C. When the crystalline melting point is lower than 270$^{\circ}$C, not only the heat resistance of PCT is insufficient, but also crystallinity decreases so that the solvent resistance is deteriorated.

Examples of copolymerizable components are acids and diols which consists of carbon, hydrogen and oxygen atoms and include dicarboxylic acids such as isophthalic acid, 2,6- or 2,7-naphthalenedicarboxylic acid, 4,4'-diphenyldicarboxylic acid and the like, and glycols such as ethylene glycol, propylene glycol, 1,4-butanediol and the like.

A ratio of a cis-isomer to a trans-isomer in 1,4-cyclohexanedimethanol is not critical. In general, a transisomer rich one is preferable. Specifically, this ratio is from 4:6 to 0:10.

PCT to be used in the present invention may be prepared by a conventional melt polymerization method. In order to reduce amounts of low molecular weight materials and pyrolyzed materials contained in the produced polymer, the melt polymerization is stopped when the polymerization proceeds to a suitable extent, and then the melt polymerized product is subjected to solid phase polymerization to obtain the polymer having a desired polymerization degree. When the polymer prepared by such polymerization method is extracted with chloroform for 24 hours, an amount of extracted materials is 0.6 % by weight or less, preferably 0.3 % by weight or less.

The polymerization degree of the polymer is adjusted so that an intrinsic viscosity of the polymer, which is measured by the below described method, is at least 0.75, preferably at least 0.85 in view of the decrease of the polymerization degree during film formation by melting and film continuity during stretching.

The PCT film of the present invention may contain fine particles inactive to PCT, if necessary. For example, to improve slipperiness of the film, the film can contain inorganic or organic fine particles such as kaolin, talc, silicon dioxide, calcium carbonate, lithium fluoride, titanium dioxide, zeolite, calcium terephthalate, crosslinked polymers and the like. The fine particles preferably have an average particle size of 0.01 to 5 $\mu$m, and an addition amount is from 0.05 to 1.0 % by weight based on the weight of PCT.

In addition, the PCT film of the present invention may contain a conventional additive such as a stabilizer, an antioxidant and the like. An amount of the additive is usually 1.3 % by weight or less, preferably 0.5 % by weight or less, more preferably 0.2 % by weight or less based on the weight of PCT. When the amount of the additive exceeds the above upper limit, the amount of the extracted materials with chloroform cannot be decreased to 1.3 % by weight or less per 24 hours.

The inactive fine particles and/or the additive may be compounded in PCT by a conventional method for compounding them in PET. In particular, when the additive is compounded, preferably a master batch containing the additive in a high concentration is prepared and then diluted with a virgin polymer when forming a film, since an amount of the polymer which is subjected to thermal history by melt kneading can be reduced.

When the PCT film of the present invention is extracted with chloroform for 24 hours, the amount of the extracted materials is 1.3 % by weight or less. Such small amount of the extracted materials can be achieved by minimizing the amount of the pyrolyzed or oxidatively destructed materials. In comparison with PET, PCT is easily oxidatively deteriorated during melt extrusion and pyrolyzed since a melt extrusion temperature of PCT should be set higher than PET. Accordingly, the PCT film contains a larger amount of the destructed materials and the low molecular weight materials generated by thermal destruction and pyrolysis than the PET film. To prevent this, it is effective to remove oxygen from a hopper of an extruder by evacuating the hopper or filling the hopper with nitrogen gas so as to suppress the oxidative destruction. However, it is difficult to completely remove oxygen from the hopper, and a small amount of oxygen contained in the polymer cannot be neglected. Then, in order to minimize the influence of oxygen and suppress the pyrolysis, it is preferable to keep the extrusion temperature as low as possible. In particular, since PCT which has been subjected to the solid phase polymerization has a high melt viscosity, a resin temperature at an exit of the extruder tends to become very high due to shear when an extrusion screw which is usually used for extruding PET is used. To suppress the heat generation due to shear, it is preferred to use a full-flighted screw or a double flighted screw having a compression ratio of 1.5 to 2.3 and an L/D ratio of 20 to 28. A difference between the resin temperature at the extruder exit and a crystalline melting point of the formed film is usually 30°C or less, preferably 20°C or less. To increase an discharged amount while keeping this temperature difference as small as possible, the double flighted screw is more advantageous than the full-flighted screw.

Through minimizing the oxidative and thermal deterioration of the polymer by the use of the above method, the extracted amount (W) from the film after biaxial orientation can be reduced to 1.3 % by weight/24 hours, preferably 1.1 % by weight/24 hours, more preferably 0.8 % by weight/24 hours.

The PCT film of the present invention is a biaxially oriented film and has a density ($\rho$) of from 1.220 to 1.245 g/cm$^3$, preferably from 1.230 to 1.240 g/cm$^3$ and a degree of plane orientation ($\Delta$P) of from 0.090 to 0.115, preferably from 0.095 to 0.110.

When the film density is smaller than 1.220, the heat resistance of the film decreases, and also the solvent resistance to the refrigerant in the air conditioner or the refrigerator decreases. When the film density exceeds 1.245, the degree of crystallization becomes too high so that the film becomes unpreferably fragile. When the degree of plane orientation is smaller than 0.090, the solvent resistance to the refrigerant decreases, and when it exceeds 0.115, a coefficient of thermal contraction becomes too large.

Now, a film forming condition of the polyester film of the present invention will be explained.

Polymer chips are usually dried at a temperature of 120 to 150°C for 3 to 4 hours, and melt extruded as described above with minimizing the oxidative and thermal deterioration. To make a film thickness uniform, it is preferred to use a metering pump and/or a filter for removing agglomerates of foreign materials and particles in the polymer. For sheeting, it is preferred to cool and solidify the polymer with contacting the sheet onto a casting drum by an electrostatic contacting method. In particular, when the polyester has a composition such that contents of 1,4-cyclohexanedimethanol in the acid component and of terephthalic acid in the glycol component are both almost 100 %, the electrostatic contacting method is often employed since a crystallization rate of such polyester is high.

An obtained unstretched film is then stretched. For stretching, the film is generally stretched by sequential stretching, namely the film is stretched in a lengthwise direction by rolling, and then in a width direction by tentering. A suitable stretching temperature is from 90 to 130°C.

The stretching in the lengthwise direction is carried out at a temperature of 90 to 130°C with a stretch ratio of 2.0 to 5.0 so that the film after stretching in the lengthwise direction has a birefringence ($\Delta$n) of 0.040 to 0.080, preferably 0.050 to 0.075. The stretching in the width direction is carried out at a temperature of 100 to 130°C with a stretch ratio of 3.0 to 5.0, preferably 3.3 to 4.5. Such stretch ratio may be achieved by stretching the film in a single step, though it may be achieved by stretching the film in a two or more steps.

When a rate of strain in the lengthwise stretching is set in a rage from 5000 to 100,000 %/min., preferably from 10,000 to 60,000 %/min., and a stretching temperature during the stretching in the width direction is so adjusted that a substantial stretching ratio coincides with a predetermined stretching ratio, fluctuation of the film thickness is suppressed.

The biaxially oriented film is supplied in a heat setting zone and heat set. Usually, the heat setting is carried out by the tentering method, and a hot air heated at a temperature of 150 to 260°C, preferably 180 to 240°C is blown on the film for one second to three minutes. During heat setting, the film can be relaxed or tentered by 1 to 5 % in the width direction.

## PREFERRED EMBODIMENTS OF THE INVENTION

The present invention will be illustrated by the following Examples.

In the Examples, properties are measured by the following methods:

### 1. Crystalline melting point (°C) of a film

Using a DSC-1 type differential scanning calorimeter (manufactured by Perkin-Elmer), a DSC chart is recorded at a heating rate of 16°C/min, and an endothermic peak temperature due to crystalline melting is regarded as a crystalline melting point.

## 2. Film density $\rho$ (g/cm$^3$)

In a density gradient tube in which a density gradient is achieved by a mixed solvent of n-heptane and carbon tetrachloride, a float having a standard density is set. Then, from a relative position of a film sample with the float, the film density is read. A measuring temperature is 25°C.

## 3. Degree of plane orientation (ΔP) and birefringence (Δn)

Using an Abbe's refractometer (manufactured by Atago Optics Co., Ltd.), a refractive index $n_\gamma$ in the lengthwise direction of the film, a refractive index $n_\beta$ in the width direction of the film and a refractive index $n_\alpha$ in a thickness direction are measured with the sodium D line at 23°C. Then, according to the following equations, a degree of plane orientation and birefringence are calculated:

$$\Delta P = \frac{n_\gamma + n_\beta}{2} - n_\alpha$$

$$\Delta n = n_\gamma - n_\beta$$

## 4. Extracted amount with chloroform

About 100 g of a film is comminuted and vacuum dried at 100°C for 24 hours. Then, the polymer powder is precisely weighed (A g), extracted with chloroform under reflux for 24 hours, dried and again weighed (B g). The extracted amount is calculated according to the following equation:

$$\text{Extracted amount (wt.\%)} = \frac{A - B}{A} \times 100$$

## 5. Intrinsic viscosity $[\eta]$

One gram of the polymer or film is dissolved in 100 ml of a mixed solvent of phenol and tetrachloroethane in a weight ratio of 50:50 and a viscosity is measured at 30°C. In this case, the intrinsic viscosity is calculated using the Hüggins constant of 0.33 irrespective of the polymer compositions.

## 6. Resin temperature at extruder exit

A highly sensitive thermometer is set at a center of an exit conduit of the extruder and a temperature of the flowing resin is measured.

## 7. Resistance to halogenated hydrocarbons

In an autoclave, a refrigerant having the following composition and a film sample are charged with immersing the film sample completely in the refrigerant and heated at 150°C under 20 kg/cm$^2$ for 500 hours. Then, the film sample is removed from the autoclave and dried and its intrinsic viscosity, strength and elongation are measured according to JIS C 2318:

Refrigerant 1: R134a + polyglycol oil
(volume ratio = 1 : 1, water content: 2700 ppm in total)
Refrigerant 2: R22 (CHClF$_2$) + mineral oil
(volume ratio = 1 : 1, water content: 40 ppm in total)

The strength, elongation and intrinsic viscosity are expressed in terms of their retention with a value before this test being 100.

Example 1

A dicarboxylic acid component consisting of 95 % by mole of terephthalic acid and 5 % by mole of isophthalic acid and a glycol component consisting of 100 % of 1,4-cyclohexanedimethanol having a cis/trans ratio of 7:3 were heated while stirring in a polymerization reactor in the presence of titanium oxide as a catalyst in an amount of 0.06 % by mole based on the acid component to effect esterification.

After adding amorphous silica having an average particle size of 1.45 $\mu$m in an amount of 0.08 % by weight based on the weight of the polymer, the ester was polycondensated to obtain poly-1,4-cyclohexanedimethylene terephthalate copolymer having an intrinsic viscosity $[\eta]$ of 0.65. The polymer was chipped and solid phase polymerized in a nitrogen gas stream to obtain a polyester having an intrinsic viscosity $[\eta]$ of 1.05. The extracted amount with chloroform was 0.18 % by weight.

After drying the polyester at 120°C for 4 hours, the polyester was supplied in an extruder having a double flighted screw with a compression ratio of 2.0 and an L/D ratio of 25 and equipped with a vacuum hopper, and melt extruded with applying a reduced pressure of about 1 Torr. During the melt extrusion, a barrel temperature was kept at 300°C, and the resin temperature at the extruder exit was 306°C.

The extruded polymer melt was cooled on a casting drum kept at 40°C by the electrostatic contacting method to form an unstretched film having a thickness of about 1.1 mm.

Then, the unstretched film was preheated by contacting it to a metal roll kept at 105°C and 3.1 times stretched in the lengthwise direction between a pair of rolls which were rotated at different circumferential speeds while irradiating the film with an IR heater. A rate of strain was 10,000 %/min. At this stage, the birefringence $\Delta$n was 0.070.

The film was forwarded to a tenter and 3.6 times stretched in the width direction at 120°C and heat set at 240°C in the same tenter for 30 seconds to obtain a biaxially oriented film having a thickness of 100 $\mu$m.

Properties of the obtained film are shown in the Table.

As seen from the Table, the film had sufficient resistance to hydrolysis with the refrigerant 1 containing a large amount of water, and degradation of the polymer during melt extrusion was minimized so that the extracted amount from the film with chloroform was small.

Comparative Example 1

The solid phase polymerized polyester chips as used in Example 1 as such were used. After drying, the polyester chips were supplied in an extruder having a conventional type screw with a compression ratio of 3.4 and an L/D ratio of 25 and equipped with a vacuum hopper and melt extruded under a reduced pressure of about 1 Torr. in the same manner as in Example 1. Though the barrel temperature was kept at 300°C, the resin temperature at the extruder exit was raised to 338°C.

Thereafter, the polymer was cast, stretched in the lengthwise direction and the width direction and heat set in the same manner as in Example 1 to obtain a biaxially oriented film having a thickness of 100 $\mu$m.

The properties of the obtained film are shown in the Table.

Since the resin temperature was higher than that in Example 1 during extrusion, the intrinsic viscosity $[\eta]$ of the film decreased and the extracted amount from the film with chloroform increased. Further, the hydrolysis resistance was slightly decreased in comparison with Example 1.

Example 2

A dicarboxylic acid component consisting of 100 % of terephthalic acid and a glycol component consisting of 100 % of 1,4-cyclohexanedimethanol having a cis/trans ratio of 7:3 were heated while stirring in a polymerization reactor in the presence of titanium oxide as a catalyst in an amount of 0.06 % by mole based on the acid component to effect esterification.

After adding amorphous silica having an average particle size of 1.45 $\mu$m in an amount of 0.08 % by weight based on the weight of the polymer, the ester was polycondensated to obtain poly-1,4-cyclohexanedimethylene terephthalate copolymer having an intrinsic viscosity $[\eta]$ of 0.60. The polymer was chipped and solid phase polymerized in a nitrogen gas stream to obtain a polyester having an intrinsic viscosity $[\eta]$ of 0.96. The extracted amount with chloroform was 0.20 % by weight.

After drying the polyester under the same condition as in Example 1, the polyester was supplied in the same extruder as used in Example 1 and melt extruded with applying a reduced pressure of about 1 Torr. During the melt extrusion, a barrel temperature was kept at 305°C, and the resin temperature at the extruder exit was 311°C.

Thereafter, the polymer was casted, stretched in the lengthwise direction and the width direction and heat set in the same manner as in Example 1 to obtain a biaxially oriented film having a thickness of about 100 μm.

Properties of the obtained film are shown in the Table.

Similar to the film of Example 1, the hydrolysis resistance was good, and the extracted amount from the film with chloroform was small.

Comparative Example 2

Using the same materials as used in Example 1, the polymer was melt extruded, and stretched in the lengthwise direction and in the width direction, followed by setting at 130°C for 15 seconds to obtain a biaxially oriented film having a thickness of 100 μm.

Properties of the obtained film are shown in the Table.

Since the film had a small density and insufficient crystallinity, in the test of resistance to halogenated hydrocarbons, it was whitened due to crystallization by the influence of the temperature of 150°C and the refrigerant, and the strength and the elongation were greatly decreased.

Comparative Example 3

Using the same materials as used in Example 1, the polymer was melt extruded to obtain an unstretched film having a thickness of about 500 μm.

Then, the unstretched film was preheated by contacting it to a metal roll kept at 105°C and 2.0 times stretched in the lengthwise direction between a pair of rolls which were rotated at different circumferential speeds while irradiating the film with an IR heater. A rate of strain was 5,000 %/min. At this stage, the birefringence was 0.035.

The film was forwarded to a tenter and 2.5 times stretched in the width direction at 120°C and heat set at 240°C in the same tenter for 30 seconds to obtain a biaxially oriented film having a thickness of 100 μm.

Properties of the obtained film are shown in the Table.

Since the degree of plane orientation was small, the strength and the elongation were deteriorated in the test of resistance to halogenated hydrocarbon with the refrigerant 2 in which the polymer material tends to be influenced easily.

Comparative Example 4

In the polymerization of Example 1, the polymer was not subjected to the solid phase polymerization, and the polymer having an intrinsic viscosity $[\eta]$ of 0.65 was used. The extracted amount from this polymer with chloroform was 1.05 % by weight.

After drying the polyester at 135°C for 4 hours, the polyester was supplied in the same extruder as used in Example 1 and melt extruded with applying a reduced pressure of about 1 Torr. During the melt extrusion, a barrel temperature was kept at 300°C, but the resin temperature at the extruder exit was 303°C.

Thereafter, the polymer was casted, stretched in the lengthwise direction and the width direction and heat set in the same manner as in Example 1 to obtain a biaxially oriented film having a thickness of about 100 μm.

Properties of the obtained film are shown in the Table.

Though the thermal degradation during the extrusion was in the same level as in Example 1, the extracted amount with chloroform was larger than that in Example 1 since the polymer was not subjected to the solid phase polymerization.

Comparative Example 5

Polyethylene terephthalate containing amorphous silica having an average particle size of 1.3 μm was prepared by conventional melt polymerization and solid phase polymerization. The polyester had the intrinsic viscosity $[\eta]$ of 0.75, and the extracted amount with chloroform of 0.11 % by weight.

After drying the polyester at 160°C for 4 hours, the polyester was supplied in the same extruder as used in Comparative Example 1 and melt extruded with applying a reduced pressure of about 1 Torr. During the melt extrusion, a barrel temperature was kept at 285°C, but the resin temperature at the extruder exit was 287°C.

Thereafter, the polymer was casted, stretched in the lengthwise direction and the width direction and heat set in the same manner as in Example 1 except that the preheating roll was heated at 80°C, the temperature for stretching in the width direction was 105°C and the setting temperature was 230°C to obtain a biaxially oriented film having a thickness of about 100 $\mu$m.

Properties of the obtained film are shown in the Table.

Though the extracted amount with chloroform was small, the polymer was severely hydrolyzed with water present in the refrigerant since it was PET. After the test of resistance to fluorohydrocarbons, the film was very fragile.

Table

| Example No. | 1 | C.1 | 2 | C.2 | C.3 | C.4 | C.5 |
|---|---|---|---|---|---|---|---|
| Polymer composition (% by mole) TPA[*1) | 95 | 95 | 100 | 95 | 95 | 95 | 100 |
| 1,4-CHDM[*2) | 100 | 100 | 100 | 100 | 100 | 100 | No |
| Other[*3) | IPA 5 | IPA 5 | No | IPA 5 | IPA 5 | IPA 5 | EG 100 |
| Raw polymer [$\eta$] | 1.05 | 1.05 | 0.96 | 1.05 | 1.05 | 0.65 | 0.75 |
| Film [$\eta$] | 0.85 | 0.63 | 0.75 | 0.85 | 0.85 | 0.55 | 0.71 |
| Melting point of film (°C) | 285 | 285 | 290 | 285 | 285 | 285 | 258 |
| Resin temperature at extruder exit (°C) | 308 | 338 | 311 | 308 | 308 | 303 | 286 |
| Extracted amount with chloroform (% by weight) | 0.72 | 2.10 | 1.05 | 0.85 | 0.89 | 1.73 | 0.59 |
| Degree of plane orientation ΔP | 0.105 | 0.105 | 0.107 | 0.080 | 0.085 | 0.103 | 0.167 |
| Density $\rho$ (g/cm$^3$) | 1.232 | 1.233 | 1.233 | 1.215 | 1.232 | 1.235 | 1.397 |
| Resistance to halogenated hydrocarbon Refrigerant 1: [$\eta$] | 0.74 | 0.50 | 0.66 | 0.71 | 0.72 | 0.48 | 0.30 |
| Retention (%) of Strength | 90 | 84 | 91 | 70 | 87 | 90 | 33 |
| Elongation | 84 | 79 | 86 | 61 | 80 | 85 | 2 |
| Refrigerant 2; [$\eta$] | 0.82 | 0.60 | 0.72 | 0.75 | 0.76 | 0.53 | 0.58 |
| Retention (%) of Strength | 98 | 96 | 99 | 42 | 71 | 96 | 67 |
| Elongation | 95 | 90 | 96 | 20 | 63 | 93 | 65 |

Note: *1) Terephthalic acid.
*2) 1,4-Cyclohexanedimethanol.
*3) IPA: Isophthalic acid.
EG: Ethylene glycol.

## Claims

1. An insulation material for an air conditioner or a refrigerator, consisting of a biaxially oriented film of poly-1,4-cyclohexanedimethylene terephthalate which satisfies the following four property requirements:

$270 \leqq MP \quad (1)$

$1.220 \leqq \rho \leqq 1.245 \quad (2)$

$0.090 \leqq \Delta P \leqq 0.115 \quad (3)$

and

$W \leqq 1.3 \quad (4)$

wherein MP is a crystalline melting point ($^\circ$C), $\rho$ is a density of the film (g/cm$^3$), $\Delta P$ is a degree of plane orientation of the film, and W is an extracted amount from the film with chloroform (wt. %/24 hours).

2. The insulating material according to claim 1, wherein said extracted amount from said film with chloroform is 1.1 % by weight per 24 hours.

3. The insulating material according to claim 1, wherein said film has a density of 1.230 to 1.240.

4. The insulating material according to claim 1, wherein said film has a degree of plane orientation of 0.095 to 0.110.

5. Use of a biaxially oriented film of poly-1,4-cyclohexanedimethylene terephthalate which satisfies the following four property requirements:

$270 \leqq MP \quad (1)$

$1.220 \leqq \rho \leqq 1.245 \quad (2)$

$0.090 \leqq \Delta P \leqq 0.115 \quad (3)$

and

$W \leqq 1.3 \quad (4)$

wherein MP is a crystalline melting point ($^\circ$C), $\rho$ is a density of the film (g/cm$^3$), $\Delta P$ is a degree of plane orientation of the film, and W is an extracted amount from the film with chloroform (wt. %/24 hours),
as an insulating material for an air conditioner or a refrigerator.

**Patentansprüche**

1. Isolationsmaterial für eine Klimaanlage oder einen Kühlschrank, bestehend aus einem biaxial orientierten Film aus Poly-1,4-cyclohexandimethylenterephthalat, das die folgenden vier Eigenschaftserfordernisse erfüllt:

$270 \leqq MP \quad (1)$

$1{,}220 \leqq \rho \leqq 1{,}245 \quad (2)$

$0.090 \leqq \Delta P \leqq 0.115 \quad (3)$

und

$W \leqq 1.3 \quad (4)$

worin bedeuten: MP ein kristalliner Schmelzpunkt ($^\circ$C), $\rho$ eine Dichte des Filmes (g/cm$^3$), $\Delta P$ ein Grad der planaren Orientierung des Filmes und W eine extrahierte Menge von dem Film mit Chloroform (Gew.%/24 h).

2. Isolationsmaterial nach Anspruch 1,
worin die extrahierte Menge von dem Film mit Chloroform 1,1 Gew.% pro 24 Stunden ist.

3. Isolationsmaterial nach Anspruch 1,
worin der Film eine Dichte von 1,230 bis 1,240 hat.

4. Isolationsmaterial nach Anspruch 1,
worin der Film einen Grad der planaren Orientierung von 0,095 bis 0,110 hat.

5. Verwendung eines biaxial orientierten Filmes aus Poly-1,4-cyclohexandimethylenterephthalat, der die folgenden vier Eigenschaftserfordernisse erfüllt:

$$270 \leqq MP \qquad (1)$$

$$1,220 \leqq \rho \leqq 1,245 \qquad (2)$$

$$0,090 \leqq \Delta P \leqq 0,115 \qquad (3)$$

und

$$W \leqq 1.3 \qquad (4)$$

worin bedeuten: MP ein kristalliner Schmelzpunkt ($^\circ$C), $\rho$ eine Dichte des Filmes (g/cm$^3$), $\Delta P$ ein Grad der planaren Orientierung des Filmes und W eine extrahierte Menge von dem Film mit Chloroform (Gew.%/24 h),
als ein Isolationsmaterial für eine Klimaanlage oder einen Kühlschrank.

**Revendications**

1. Matériau isolant pour un climatiseur ou un réfrigérateur, constitué d'un film à orientation biaxiale en poly(téréphtalate de 1,4-cyclohexanediméthylène), satisfaisant aux quatre conditions de propriété suivantes :

$$270 \leqq PF \qquad (1)$$

$$1,220 \leqq \rho \leqq 1,245 \qquad (2)$$

$$0,090 \leqq \Delta P \leqq 0,115 \qquad (3)$$

et

$$W \leqq 1,3 \qquad (4)$$

dans lequel PF est un point de fusion cristallin ($^\circ$C), $\rho$ est une densité du film (g/cm$^3$), $\Delta P$ est un degré d'orientation bidimensionnelle du film, et W est une quantité extraite du film par du chloroforme (% en pds/24 heures).

2. Matériau isolant selon la revendication 1, dans lequel ladite quantité extraite dudit film par du chloroforme est de 1,1 % en poids par 24 heures.

3. Matériau isolant selon la revendication 1, dans lequel ledit film a une densité de 1,230 et 1,240.

4. Matériau isolant selon la revendication 1, dans lequel ledit film a un degré d'orientation du plan de 0,095 à 0,110.

**5.** Utilisation d'un film à orientation biaxiale en poly(téréphtalate de 1,4-cyclohexanediméthylène), satisfaisant aux quatre conditions de propriété suivantes :

$$270 \leq PF \quad (1)$$

$$1,220 \leq \rho \leq 1,245 \quad (2)$$

$$0,090 \leq \Delta P \leq 0,115 \quad (3)$$

et

$$W \leq 1,3 \quad (4)$$

dans lequel PF est un point de fusion cristallin (°C), $\rho$ est une densité du film (g/cm$^3$), $\Delta P$ est un degré d'orientation bidimensionnelle du film, et W est une quantité extraite du film par du chloroforme (% en pds/24 heures),
comme matériau isolant pour un climatiseur ou un réfrigérateur.